# EUROPEAN PATENT APPLICATION

(11) **EP 3 385 426 A1**
(43) Date of publication of application: **10.10.2018**
(21) Application number: 17164499.0
(22) Date of filing: 03.04.2017
(51) Int. Cl.: D04H 3/013, B32B 5/26

(54) **NONWOVEN CELLULOSE FIBER FABRIC WITH INCREASED WATER HOLDING CAPABILITY AND LOW BASIS WEIGHT**

(71) Applicant: LENZING AKTIENGESELLSCHAFT, 4860 Lenzing (AT)
(72) Inventor: Carlyle, Tom, Spanish Fort, AL Alabama 36527 (US); Einzmann, Mirko, 4600 Wels (AT); Goldhalm, Gisela, 3363 Neufurth (AT); Hayhurst, Malcolm John, Bulkington, Warwickshire CV12 9RZ (GB); Mayer, Katharina, 4813 Altmünster (AT); Sagerer Foric, Ibrahim, 4840 Vöcklabruck (AT)
(74) Representative: Dilg, Haeusler, Schindelmann Patentanwaltsgesellschaft mbH

(57) **Abstract**

It is described a nonwoven cellulose fiber fabric (102) directly manufactured from a lyocell spinning solution (104). The fabric (102) comprises a network of substantially endless fibers (108). The fabric (102) exhibits a water holding capability of at least 850 mass percent. Further, the fabric (102) comprises a mass per unit area which is smaller than 25 gram per square meter. It is further described a method and a device for manufacturing such a fabric (102), a product or composite comprising such a fabric, and various use applications for such a fabric (102).

## Description

### Field of invention

The invention relates to a nonwoven cellulose fiber fabric, a method of manufacturing a nonwoven cellulose fiber fabric, a device for manufacturing a nonwoven cellulose fiber fabric, a product or composite, and a method of use for such a fabric.

### Background of the invention

Lyocell technology relates to the direct dissolution of cellulose wood pulp or other cellulose-based feedstock in a polar solvent (for example n-methyl morpholine n-oxide, which may also be denoted as "amine oxide" or "AO") to produce a viscous highly shear-thinning solution which can be transformed into a range of useful cellulose-based materials. Commercially, the technology is used to produce a family of cellulose staple fibers (commercially available from Lenzing AG, Lenzing, Austria under the trademark TENCEL®) which are widely used in the textile industry. Other cellulose products from lyocell technology have also been used.

Cellulose staple fibers have long been used as a component for conversion to nonwoven webs. However, adaption of lyocell technology to produce nonwoven webs directly would access properties and performance not possible for current cellulose web products. This could be considered as the cellulosic version of the meltblow and spunbond technologies widely used in the synthetic fiber industry, although it is not possible to directly adapt synthetic polymer technology to lyocell due to important technical differences.

Much research has been carried out to develop technology to directly form cellulose webs from lyocell solutions (*inter alia,* WO 98/26122, WO 99/47733, WO 98/07911, US 6,197,230, WO 99/64649, WO 05/106085, EP 1 358 369, EP 2 013 390). Further art is disclosed in WO 07/124521 A1 and WO 07/124522 A1.

Like other cellulose materials nonwoven cellulose fiber fabric has a limited liquid absorption capability and a certain contamination with typically unwanted contaminations such heavy metal element contaminations. However, several applications of nonwoven cellulose fiber fabric require on the one hand a large liquid absorption capability and on the other hand a high degree of purity with only a very limited amount of contaminations.

### Summary of the Invention

There may be a need for improving the water holding capability of nonwoven cellulose fiber fabrics while keeping contaminations of the fabric within minimum acceptable limits.

This need may be met by the subject matter according to the independent claims. Advantageous embodiments of the present invention are described by the dependent claims.

According to a first aspect of the invention there is provided a nonwoven cellulose fiber fabric, which is in particular directly manufactured from a lyocell spinning solution. The provided fabric comprises a network of substantially endless fibers and exhibits a water holding capability of at least 850 mass percent. Further, the provided fabric comprises a mass per unit area which is lower than 25 gram per square meter. Thereby, the described mass percentage of the water holding capability indicates the ratio between the absorbable water mass and the fiber mass.

The provided fabric is based on the idea that by using appropriate process parameter (values) for manufacturing the fabric directly from a lyocell spinning solution a nonwoven cellulose fiber fabric or fiber web can be provided which exhibits, at least compared to know cellulose products, an increased liquid holding capability. Thereby, the increased liquid holding capability is realized even with comparatively thin fabrics having a low "mass per unit area". This increases for many applications the efficiency for a corresponding nonwoven cellulose fiber fabric product or opens nonwoven cellulose fiber fabric products for new applications.

In accordance with the invention this extraordinary water holding capability is achieved for fabrics having a low mass per unit area. It is mentioned that the term "mass per unit area" is often also denominated "basis weight".

Fabrics with such a low basis weight, i.e. a basis weight of less than 25 gram per square meter, and the described large water holding capability of at least 850 mass percent may be used for a large variety of applications, which require for instance a thin nonwoven fabric. In this context it is mentioned that a fabric having a large water holding capability typically also has a large holding capability for other liquids. This holds in particular for water based liquids. i.e. for liquids where water acts as a solvent.

It has been found out that the capillarity of a nonwoven cellulose fiber fabric has a strong influence on the water holding capability. In this context one should recognize that the capillarity is associated with the number and the size of (micro) cavities such as voids, gaps, and/or tubes formed between neighboring fibers. Such (micro) cavities provide a more or less appropriate accommodation space for liquid particles, in particular water particles.

The described water holding capability values relate to measurements which are carried out in accordance with the standard DIN 53 923 (F36_3) and relate to fabrics having a mass per unit area respectively a basis weight in the range between 16 and 38 gsm (gram per square meter). Specifically, the water holding capability values relate to measurements which are carried at in the presence of above identified standard climate conditions.

In the context of this application, the term "nonwoven cellulose fiber fabric" (which may also be denoted as nonwoven cellulose filament fabric) may particularly denote a fabric or web composed of a plurality of substantially endless fibers. The term "substantially endless fibers" has in particular the meaning of filament fibers having a significantly longer length than conventional staple fibers. In an alternative formulation, the term "substantially endless fibers" may in particular have the meaning of a web formed of filament fibers having a significantly smaller amount of fiber ends per volume than conventional staple fibers. In particular, endless fibers of a fabric according to an exemplary embodiment of the invention may have an amount of fiber ends per volume of less than 10,000 ends/cm³, in particular less than 5,000 ends/cm³. For instance, when staple fibers are used as a substitute for cotton, they may have a length of 38 mm (corresponding to a typical natural length of cotton fibers). In contrast to this, substantially endless fibers of the nonwoven cellulose fiber fabric may have a length of at least 200 mm, in particular at least 1000 mm. However, a person skilled in the art will be aware of the fact that even endless cellulose fibers may have interruptions, which may be formed by processes during and/or after fiber formation. As a consequence, a nonwoven cellulose fiber fabric made of substantially endless cellulose fibers has a significantly lower number of fibers per mass compared to nonwoven fabric made from staple fibers of the same denier. A nonwoven cellulose fiber fabric may be manufactured by spinning a plurality of fibers and by attenuating and stretching the latter towards a preferably moving fiber support unit. Thereby, a three-dimensional network or web of cellulose fibers is formed, constituting the nonwoven cellulose fiber fabric. The fabric may be made of cellulose as main or only constituent.

In the context of this application, the term "lyocell spinning solution" may particularly denote a solvent (for example a polar solution of a material such as N-methyl-morpholine, NMMO, "amine oxide" or "AO") in which cellulose (for instance wood pulp or other cellulose-based feedstock) is dissolved. The lyocell spinning solution is a solution rather than a melt. Cellulose filaments may be generated from the lyocell spinning solution by reducing the concentration of the solvent, for instance by contacting said filaments with water. The process of initial generation of cellulose fibers from a lyocell spinning solution can be described as coagulation.

In the context of this application, the term "gas flow" may particularly denote a flow of gas such as air substantially parallel to the moving direction of the cellulose fiber or its preform (i.e. lyocell spinning solution) while and/or after the lyocell spinning solution leaves or has left the spinneret.

In the context of this application, the term "coagulation fluid" may particularly denote a non-solvent fluid (i.e. a gas and/or a liquid, optionally including solid particles) which has the capability of diluting the lyocell spinning solution and exchanging with the solvent to such an extent that the cellulose fibers are formed from the lyocell filaments. For instance, such a coagulation fluid may be water mist.

In the context of this application, the term "process parameters" may particularly denote all physical parameters and/or chemical parameters and/or device parameters of substances and/or device components used for manufacturing nonwoven cellulose fiber fabric which may have an impact on the properties of the fibers and/or the fabric, in particular on fiber diameter and/or fiber diameter distribution. Such process parameters may be adjustable automatically by a control unit and/or manually by a user to thereby tune or adjust the properties of the fibers of the nonwoven cellulose fiber fabric. Physical parameters which may have an impact on the properties of the fibers (in particular on their diameter or diameter distribution) may be temperature, pressure and/or density of the various media involved in the process (such as the lyocell spinning solution, the coagulation fluid, the gas flow, etc.). Chemical parameters may be concentration, amount, pH value of involved media (such as the lyocell spinning solution, the coagulation fluid, etc.). Device parameters may be size of and/or distances between orifices, distance between orifices and fiber support unit, speed of transportation of fiber support unit, the provision of one or more optional *in situ* post processing units, the gas flow, etc.

The term "fibers" may particularly denote elongated pieces of a material comprising cellulose, for instance roughly round or non-regularly formed in cross-section, optionally twisted with other fibers. Fibers may have an aspect ratio which is larger than 10, particularly larger than 100, more particularly larger than 1000. The aspect ratio is the ratio between the length of the fiber and a diameter of the fiber. Fibers may form networks by being interconnected by merging (so that an integral multi-fiber structure is formed) or by friction (so that the fibers remain separate but are weakly mechanically coupled by a friction force exerted when mutually moving the fibers being in physical contact with one another). Fibers may have a substantially cylindrical form which may however be straight, bent, kinked, or curved. Fibers may consist of a single homogenous material (i.e. cellulose). However, the fibers may also comprise one or more additives. Liquid materials such as water or oil may be accumulated between the fibers.

According to an embodiment of the invention the fibers have a copper content of less than 5 ppm and/or have a nickel content of less than 2 ppm.

The ppm values mentioned in this document all relate to mass (rather than to volume). Apart from this, the heavy metal contamination of the fibers or the fabric may be not more than 10 ppm for each individual heavy metal element.

Due to the use of a lyocell spinning solution as a basis for the formation of the endless fiber-based fabric (in particular when involving a solvent such as N-methyl-morpholine, NMMO), the contamination of the fabric with heavy metals such as copper or nickel (which may cause allergic reactions of a user) may be kept extremely small.

According to a further embodiment of the invention different ones of the fibers are located at least partially in different distinguishable layers and the fabric comprises in particular at least one of the following features: (a) fibers of different layers are integrally connected at at least one inter-layer merging position between the layers; (b) different ones of the fibers being located at least partially in different layers differ concerning fiber diameter, in particular differ concerning an averaged fiber diameter; (c) fibers of different layers have the same fiber diameter, in particular have substantially the same averaged fiber diameter; (d) fibers networks of different layers provide different functionality, wherein the different functionality in particular comprises at least one of the group consisting of different wicking, different anisotropic behavior, different optical properties, different liquid holding capability, different cleanability, different roughness, different smoothness, and different mechanical properties.

In this context "different ones of the fibers being located at least partially in different distinguishable layers" may mean that the respective layers show a visible separation or interface region in between at least within an image captured e.g. by means of an electron microscope. As specified with above feature (a) the different layers may be integrally connected at at least one merging position. Thereby, for instance two (or more) different layers of a fabric may be formed by serially aligning two (or more) jets with orifices through which lyocell spinning solution is extruded for coagulation and fiber formation. When such an arrangement is combined with a moving fiber support unit (such as a conveyor belt with a fiber accommodation surface), a first layer of fibers is formed on the fiber support unit by the first jet, and the second jet forms a second layer of fibers on the first layer when the moving fiber support unit reaches the position of the second jet. The process parameters of this method may be adjusted so that merging points are formed between the first layer and the second layer. As has already been mentioned above, "merging" may denote an interconnection of different fibers at the respective merging point which results in the formation of one integrally connected fiber structure composed of the previously two separate fibers which previously have been associated with different layers. In particular, fibers of the second layer under formation being not yet fully cured or solidified by coagulation may for example still have exterior skin or surface regions which are still in the liquid lyocell solution phase and not yet in the fully cured solid state. When such pre-fiber structures come into contact with one another and fully cure into the solid fiber state thereafter, this may result in the formation of two merged fibers at an interface between different layers.

As specified with above feature (b) different ones of the fibers being located at least partially in different layers differ concerning fiber diameter, in particular differ concerning an averaged fiber diameter. When different layers of the fabric are formed of fibers having different average diameters, the mechanical properties of the different layers may be adjusted separately and differently. For example, one of the layers may be provided with a stiff character by using fibers having a relatively high thickness or diameter, whereas the other layer may be provided with a smooth or elastic character (for example by using fibers having a relatively low diameter). For instance, a wipe can be manufactured having a rougher surface for cleaning by mechanically removing dirt and having a smoother surface for wiping, i.e. being configured for absorbing water or the like from a surface to be cleaned.

However, as specified with above feature (c) it is alternatively also possible that fibers of different layers have the same diameter, in particular have the same average diameter. In such an embodiment, adjacent layers may have similar or identical physical properties. They may be interconnected strongly or weakly at merging points in between. The number of such merging points per interface area may define the coupling strength between adjacent layers. With a small coupling strength, the layers may be easily separated by a user. With a high coupling strength, the layers may remain permanently attached to one another.

It is mentioned that for mutually attaching the neighboring layers within the described multilayer structure there is no need for any additional adhesion material such as a binder. As a consequence, liquid can spread through the respective layer interface without any hindrance.

According to a further embodiment of the invention fiber networks in different layers have different merging factors. This may contribute to an increased mechanical stability of the described fabric wherein the stability is in particular a stability against twisting of the fabric. Alternatively, fiber networks in different layers have at least approximately the same merging factor. This may result in a fabric having a high degree of homogeneity in particular along a direction perpendicular to the main planes of the layers

Specifically, by varying the merging factor along a height- or z-direction being perpendicular to the planes of the layers, a certain pre-tension can be achieved when the endless fibers touch down onto a fiber support unit collecting the fibers during the manufacturing process of the described fabric. Thereby, a height dependent distribution of different merging factors may allow to build up a high mechanical stability and effectively prevents a collapse of capillary cavities or voids formed within the described fabric upon the pressure of adhesion forces when liquid particles are embedded within the fabric. Generally speaking, a high mechanical stability is a beneficial characteristic for a high liquid holding capability.

According to a further embodiment of the invention the mass per unit area is between 5 and 25 gram per square meter and in particular between 8 and 20 gram per square meter.

According to a further embodiment of the invention the fabric exhibits a water holding capability of at least 900 mass percent, in particular of at least 950 mass percent and further in particular of at least 1000 mass percent.

Such further improved values of the water holding capability of the described fabric can be realized with a proper selection of (values of) above described process parameters for the coagulation of the lyocell spinning solution. In several tests with fabrics produced under so far optimized coagulation conditions water holding capabilities of up to 1100 mass percent and more has been achieved.

According to a further embodiment of the invention the fabric exhibits an oil holding capability of at least 800 mass per-cent, in particular of at least 1500 mass percent, and further in particular of at least 2000 mass percent. Thereby, the mass percentage of the oil holding capability indicates the ratio between the absorbable oil mass and the fiber mass.

For determining oil holding capability (or liquid holding capacity) of a fabric, an analysis concerning evaluation of oil and fatty liquids absorption based on EDANA standard NWSP 010.4.R0(15) can be carried out using engine oil. For the analysis, a fabric sample of a size of 10 cm x 10 cm can be formed by punching. The weight of the sample is determined, and the sample is diagonally connected to a ruler by means of strings. The sample is then dropped into a container filled with oil. The time required for wetting the fabric with oil is measured. Subsequently, the fabric is immersed in the oil for 120 seconds. The fabric is then lifted out of the oil by raising the ruler. Thereafter, oil is allowed to drip off from the fabric for 30 seconds. The weight of the fabric is determined, and the oil holding capability is calculated accordingly.

The described comparatively large oil holding capability may provide the advantage that the described fabric, which may be used e.g. as a wipe, can be used for absorbing a variety of different liquids in an effective manner. Specifically, not only water based liquids but also oil based liquids may be absorbed. In this context the term "oil based liquid" may in particular denominate any liquid wherein oil acts as a solvent. Further, the term "oil based liquid" may refer to an emulsion wherein at least one component is an oil.

Depending on the adjustment of the absolute value of the fiber diameter and/or the intra fiber and/or inter fiber diameter inhomogeneity and/or fabric density, the active fiber surface may be adjusted as well as the volume of and spacing between gaps between adjacent fibers. This has an impact on the capability of liquid to accumulate in the gaps.

In more detail, the described liquid holding capability may be based on the matter of fact that the nonwoven fiber fabric or fiber web can be considered as to represent a structure comprising a plurality of cavities or voids formed in between various neighboring fibers. In the original non soaked state of the fabric these voids are filled with air. When the fabric absorbs liquid, the voids get filled with liquid.

According to a further embodiment of the invention the fiber network comprises at least one of the following features: (a) different sections of the same fiber differ concerning fiber diameter so that a ratio between a largest fiber diameter of this fiber and a lowest fiber diameter of this fiber is more than 1.5; (b) different fibers differ concerning fiber diameter so that a ratio between a largest fiber diameter of one of the fibers and a lowest fiber diameter of another one of the fibers is more than 1.5.

In the context of this document, the term "a ratio between a largest fiber diameter and a smallest fiber diameter is more than 1.5" or the equivalent term "differing concerning fiber diameter by more than 50% in relation to a smallest diameter" may particularly denote that a ratio between largest fiber diameter and smallest fiber diameter, multiplied by 100%, wherein 100% is subtracted from the obtained result, gives a value above 50%. In other words, a ratio between a largest fiber diameter and a smallest fiber diameter may be higher than 1.5.

"Different sections of the same fiber differ concerning fiber diameter" as specified by above feature (a) may mean the inhomogeneity concerning diameter may be an intra fiber diameter variation. In such an embodiment, a respective fiber itself may show a fiber diameter inhomogeneity. Without wishing to be bound to a specific theory, it is presently believed that when such fibers form a network in the fabric, the inhomogeneity of the diameter of a respective fiber has a strong effect on the capillarity and in particular increases the number and the variety of cavities within the fabric such that the water holding capability can be adjusted.

"Different fibers differ concerning fiber diameter" as defined by above feature (b) may mean that the inhomogeneity in terms of thickness may be an *inter* fiber thickness variation. In such an embodiment, although a respective fiber itself may show a thickness homogeneity or inhomogeneity, it is mandatory that different fibers differ concerning thickness in a fiber by fiber comparison. Also in such a scenario, interaction of fibers of different diameters/thicknesses or different diameter/thickness distributions may result in a variation of the number and the sizes of inter fiber cavities respectively the capillarity which itself, as described above, has a strong influence on the water holding capability.

According to a further embodiment of the invention the fiber network comprises at least one of the following features: (a) at least 3%, in particular at least 5%, of the fibers have a non-circular cross sectional shape having a roundness of not more than 90%; (b) at least 1%, in particular at least 3%, of the fibers have a non-circular cross sectional shape having a roundness of not more than 80%, in particular of not more than 70%.

In the context of this document the term "roundness" may particularly denote the ratio between the inscribed circle and the circumscribed circle of a cross section of a fiber, i.e. the maximum and minimum sizes for circles that are just sufficient to fit inside the fiber's cross section respectively to enclose or encompass the fiber's cross section. For determining roundness, a cross sectional plane perpendicular to an extension direction of the fiber may be intersected with the fiber. Thus, roundness may be denoted as the measure of how closely the cross sectional shape of a respective fiber approaches that of a circle having a roundness of 100%.

For example, a cross-section of the respective fiber may have an oval (in particular elliptic) shape or may have a polygonal shape. More generally, a trajectory defining the exterior limits of a cross-section of a fiber may be any closed planar line showing a deviation from a circle. The cross-section of the respective fiber may be entirely round or may have one or more sharp or rounded edges.

Descriptively speaking, the fibers of the fabric according to this embodiment exhibit a significant deviation from an entirely circular cylindrical shape. From a mechanical point of view, this also has the consequence that a preferred bending direction of the fibers in the presence of a mechanical load is defined by the design of the cross-section of the fiber. For instance, wherein the fiber has an elliptic cross sectional shape with two main axes (i.e. major axis and minor axis) having different lengths, bending in the presence of an exerted force will occur predominantly with the minor axis as bending line. Thus, the bending characteristics of such a fiber fabric is no longer statistical and unpredictable, but in contrast to this increases the defined order of the nonwoven cellulose fiber fabric. Therefore, defined mechanical properties of the fabric can be adjusted in a simple way by simply influencing the cross-sectional geometry of the individual fibers. Also a mutual lay down behavior or networking behavior of the fibers may be adjusted by adjusting a deviation of some or substantially all of the fibers from a perfect circularity. Furthermore, a nonwoven cellulose fiber fabric with anisotropic mechanical properties may be manufactured when non-circular cylindrical fibers are aligned in an ordered or a partially ordered way.

According to a further embodiment of the invention at least part of the fibers are integrally merged at merging positions, wherein in particular a merging factor of the fibers is in a range between 0.1% and 100%, in particular in a range between 0,2% and 15%, and further in particular in a range between 0.5% and 10%.

In the context of this document, the term "merging" may particularly denote an integral interconnection of different fibers at the respective merging position which results in the formation of one integrally connected fiber structure composed of the previously separate fiber preforms. Merging may be denoted as a fiber-fiber connection being established during coagulation of one, some or all of the merged fibers. Interconnected fibers may strongly adhere to one another at a respective merging position without a different additional material (such as a separate adhesive) so as to form a common structure. Separation of merged fibers may require destruction of the fiber network or a part thereof.

Merging may be triggered by a corresponding control of the process parameters of a method of manufacturing the nonwoven cellulose fiber fabric. In particular, coagulation of filaments of lyocell spinning solution may be triggered (or at least completed) after the first contact between these filaments being not yet in the precipitated solid fiber state. Thereby, interaction between these filaments while still being in the solution phase and then or thereafter converting them into the solid-state phase by coagulation allows to properly adjust the merging characteristics. A degree of merging is a powerful parameter which can be used for adjusting the properties of the manufactured fabric.

In this respect it should be clear that also the number respectively the density of merging points within the fabric has an influence on the number and the (average) size of the cavities being suitable for accommodating water.

Merging between fibers may be triggered by bringing different fiber preforms in form of lyocell spinning solution in direct contact with one another prior to coagulation. By such a coagulation process, single material common precipitation of the fibers is executed, thereby forming the merging positions.

The described merging factor is a highly characteristic parameter for the networking between different fibers of the fabric's fiber network. A merging factor of zero percent corresponds to a fabric without merging points, i.e. completely separate fibers interacting with one another only by friction. A merging factor of hundred percent corresponds to a fabric consisting of merging points, i.e. completely integral fibers forming a continuous structure such as a film. By adjusting the merging factor, also the physical properties (in the context of the invention described in this document the water holding capability of the corresponding fabric may be adjusted.

For determining the merging factor (which may also be denoted as area merging factor) of fabric, the following determination process may be carried out: A square sample of the fabric may be optically analyzed. A circle, which has a diameter which has to stay fully inside the square sample, is drawn around each merging position (in particular merging point or merging line) of fibers crossing at least one of the diagonals of the square sample. The size of the circle is determined so that the circle encompasses the merging area between the merged fibers. An arithmetic average of the values of the diameter of the determined circles is calculated. The merging factor is calculated as ratio between the averaged diameter value and the diagonal length of the square sample, and may be given in percent.

Depending on the specific structure and in particular depending on the merging factor the merging positions may comprise (a) a merging point at which fibers are merged with a point contact; (b) a merging line along which fibers are mutually aligned side-by-side at least over a portion of their length to form a superordinate fiber structure. A merging point may be a dot-like structure made of the same material as the interconnected fibers. A merging line may be considered as a merging position having an oblong shape of a line significantly larger than a diameter of the fibers connected along the merging line. A merging line may hence be an extended structure connecting fibers along a section along which the fibers extend in parallel or side-by-side.

According to a further embodiment of the invention at least some individual fibers are twisted with each other and/or at least one fiber structure is twisted with another fiber structure. This may significantly improve the mechanical stability of the fabric.

In the context of this document a "fiber structure" may be any fiber arrangement comprising at least two fibers. Thereby, the fibers may be individual fibers that touch each other at least partially. Alternatively or in combination, a fiber structure may also comprise at least two fibers which are integrally connected at at least one merging position.

According to a further aspect of the invention there is provided a method of manufacturing nonwoven cellulose fiber fabric, in particular a fabric as described above, directly from a lyocell spinning solution. The provided method comprises (a) extruding the lyocell spinning solution through a jet with orifices supported by a gas flow into a coagulation fluid atmosphere to thereby form substantially endless fibers; (b) collecting the fibers on a fiber support unit to thereby form the fabric; (c) and adjusting process parameters of the manufacturing process so that (c1) the fabric exhibits a water holding capability of at least 850 mass percent, and (c2) the fabric comprises a mass per unit area which is smaller than 25 gram per square meter.

The described method is based on the idea that with an appropriate selection or process parameters an in many respect improved nonwoven cellulose fiber fabric as described above can be manufactured in an effective and reliable manner.

In the context of this document, a "jet with orifices" (which may for instance be denoted as an "arrangement of orifices") may be any structure comprising an arrangement of orifices which are linearly arranged.

It is mentioned that a variation of the diameter of different fibers may be produced by a coagulation of fibers being arranged at least substantially in parallel with each other. In other words, originally at least two different fibers being arranged in parallel at least approximately can merge with each other (along a common merging line) such that a fiber with a significantly increased diameter will be generated. By controlling (the values of) the process parameters the probability of such a fiber merge can be selected. As a consequence, the ratio between the merged (thicker) fibers and original (thinner) fibers can be adjusted for instance by adjusting the distance between neighboring orifices of the jet through which the viscous lyocell spinning solution is extruded. In this respect it should be clear that the smaller the distance is to more probable is a merging between two fibers.

Further, when using a turbulent stream of coagulation fluid respectively process air promoting the coagulation process, one could disturb the spatial distances between different not yet (fully) coagulated fibers such that the probability that two fibers meet each other on their way from the jet to the fiber support unit can be increased.

It is mentioned that also a merging from three or even more originally individual fibers can be realized. As a consequence, even thicker fibers can be produced such that the fiber diameter variation will be increased.

With regard to the relevance of "merging" for the main properties of the fabric described in this document, i.e. the water holding capability reference is made to the sections above elucidating exemplary physical theories for the dependency of these main properties from merging.

According to a further embodiment of the invention there is provided a device for manufacturing nonwoven cellulose fiber fabric directly from a lyocell spinning solution and in particular for manufacturing a fabric as described above. The provided device comprises (a) an jet with orifices configured for extruding the lyocell spinning solution supported by a gas flow; (b) a coagulation unit configured for providing a coagulation fluid atmosphere for the extruded lyocell spinning solution to thereby form substantially endless fibers; (c) a fiber support unit configured for collecting the fibers to thereby form the fabric; and (d) a control unit configured for adjusting process parameters so that (d1) the fabric exhibits a water holding capability of at least 850 mass percent and (d2) the fabric comprises a mass per unit area which is smaller than 25 gram per square meter.

The described device is based on the idea that the control unit allows to carry out in a reliable manner the above described method for manufacturing the further above described nonwoven cellulose fiber fabric.

A nonwoven cellulose fiber fabric according to an exemplary embodiment of the invention may also be combined (for instance *in situ* or in a subsequent process) with one or more other materials, to thereby form a composite according to an exemplary embodiment of the invention. Exemplary materials, which can be combined with the fabric for forming such a composite may be selected from a group of materials comprising, but not being limited to, the following materials or combinations thereof: fluff pulp, a fiber suspension, a wetlaid nonwoven, an airlaid nonwoven, a spunbond web, a meltblown web, a carded spunlaced or needlepunched web or other sheet like structures made of various materials. In an embodiment, the connection between the different materials can be done by (but not limited to) one or a combination of the following processes: merging, hydroentanglement, needle punching, hydrogen bonding, thermobonding, gluing by a binder, laminating, and/or calendering.

According to a further embodiment of the invention there is provided a method of using a nonwoven cellulose fiber fabric as described above for at least one of the group consisting of a wipe, a dryer sheet, a filter, a hygiene product, a medical application product, a geotextile, agrotextile, clothing, a product for building technology, an automotive product, a furnishing, an industrial product, a product related to leisure, beauty, sports or travel, and a product related to school or office.

According to a further aspect of the invention there is provided a product or composite comprising a nonwoven cellulose fiber fabric as described above.

Particular uses of the webs, either 100% cellulose fiber webs, or for example webs comprising or consisting of two or more fibers, or chemically modified fibers or fibers with incorporated materials such as anti-bacterial materials, ion exchange materials, active carbon, nano particles, lotions, medical agents or fire retardants, or bicomponent fibers may be as follows:
The nonwoven cellulose fiber fabric according to exemplary embodiments of the invention may be used for manufacturing wipes such as baby, kitchen, wet wipes, cosmetic, hygiene, medical, cleaning, polishing (car, furniture), dust, industrial, duster and mops wipes.

It is also possible that the nonwoven cellulose fiber fabric according to exemplary embodiments of the invention is used for manufacturing a filter. For instance, such a filter may be an air filter, a HVAC, air condition filter, flue gas filter, liquid filters, coffee filters, tea bags, coffee bags, food filters, water purification filter, blood filter, cigarette filter; cabin filters, oil filters, cartridge filter, vacuum filter, vacuum cleaner bag, dust filter, hydraulic filter, kitchen filter, fan filter, moisture exchange filters, pollen filter, HEVAC/HEPA/ULPA filters, beer filter, milk filter, liquid coolant filter and fruit juices filters.

In yet another embodiment, the nonwoven cellulose fiber fabric may be used for manufacturing absorbent hygiene products. Examples thereof are an acquisition layer, a coverstock, a distribution layer, an absorbent cover, sanitary pads, topsheets, backsheets, leg cuffs, flushable products, pads, nursing pads, disposal underwear, training pants, face masks, beauty facial masks, cosmetic removal pads, washcloths, diapers, and sheets for a laundry dryer releasing an active component (such as a textile softener).

In still another embodiment, the nonwoven cellulose fiber fabric may be used for manufacturing a medical application product. For instance, such medical application products may be disposable caps, gowns, masks and shoe cover, wound care products, sterile packaging products, coverstock products, dressing materials, one way clothing, dialyses products, nasal strips, adhesives for dental plates, disposal underwear, drapes, wraps and packs, sponges, dressings and wipes, bed linen, transdermal drug delivery, shrouds, underpads, procedure packs, heat packs, ostomy bag liners, fixation tapes and incubator mattresses.

In yet another embodiment, the nonwoven cellulose fiber fabric may be used for manufacturing geotextiles. This may involve the production of crop protection covers, capillary matting, water purification, irrigation control, asphalt overlay, soil stabilisation, drainage, sedimentation and erosion control, pond liners, impregnation based, drainage channel liners, ground stabilisation, pit linings, seed blankets, weed control fabrics, greenhouse shading, root bags and biodegradable plant pots. It is also possible to use the nonwoven cellulose fiber fabric for a plant foil (for instance providing a light protection and/or a mechanical protection for a plant, and/or providing the plant or soil with dung or seed).

In another embodiment, the nonwoven cellulose fiber fabric may be used for manufacturing clothing. For example, interlinings, clothing insulation and protection, handbag components, shoe components, belt liners, industrial headwear/foodwear, disposable workwear, clothing and shoe bags and thermal insulation may be manufactured on the basis of such fabric.

In still another embodiment, the nonwoven cellulose fiber fabric may be used for manufacturing products used for building technology. For instance, roofing and tile underlay, underslating, thermal and noise insulation, house wrap, facings for plaster board, pipe wrap, concrete moulding layers, foundations and ground stabilisation, vertical drainages, shingles, roofing felts, noise abatement, reinforcement, sealing material, and damping material (mechanical) may be manufactured using such fabric.

In still another embodiment, the nonwoven cellulose fiber fabric may be used for manufacturing an automotive product. Examples are a cabin filter, boot liners, parcel shelves, heat shields, shelf trim, moulded bonnet liners, boot floor covering, oil filter, headliners, rear parcel shelves, decorative fabrics, airbags, silencer pads, insulation materials, car covers, underpadding, car mats, tapes, backing and tufted carpets, seat covers, door trim, needled carpet, and auto carpet backing.

Still another field of application of fabric manufactured according to exemplary embodiments of the invention are furnishings, such as furniture, construction, insulator to arms and backs, cushion thicking, dust covers, linings, stitch reinforcements, edge trim materials, bedding constructions, quilt backing, spring wrap, mattress pad components, mattress covers, window curtains, wall coverings, carpet backings, lampshades, mattress components, spring insulators, sealings, pillow ticking, and mattress ticking.

In yet another embodiment, the nonwoven cellulose fiber fabric may be used for manufacturing industrial products. This may involve electronics, floppy disc liners, cable insulation, abrasives, insulation tapes, conveyor belts, noise absorbent layers, air conditioning, battery separators, acid systems, anti-slip matting stain removers, food wraps, adhesive tape, sausage casing, cheese casing, artificial leather, oil recovery booms and socks, and papermaking felts.

Nonwoven cellulose fiber fabric according to exemplary embodiments of the invention is also appropriate for manufacturing products related to leisure and travel. Examples for such an application are sleeping bags, tents, luggage, handbags, shopping bags, airline headrests, CD-protection, pillowcases, and sandwich packaging.

Still another field of application of exemplary embodiment of the invention relates to school and office products. As examples, book covers, mailing envelopes, maps, signs and pennants, towels, and flags shall be mentioned.

It has to be noted that embodiments of the invention have been described with reference to different subject matters. In particular, some embodiments have been described with reference to apparatus type claims whereas other embodiments have been described with reference to method type claims (or a use claim). However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

Figure 1 illustrates a device for manufacturing nonwoven cellulose fiber fabric which is directly formed from lyocell spinning solution being coagulated by a coagulation fluid according to an exemplary embodiment of the invention.
Figure 2 to Figure 4 show experimentally captured images of nonwoven cellulose fiber fabric according to an exemplary embodiment of the invention in which merging of individual fibers has been accomplished by a specific process control.
Figure 5 and Figure 6 show experimentally captured images of nonwoven cellulose fiber fabric according to an exemplary embodiment of the invention in which swelling of fibers has been accomplished, wherein Figure 5 shows the fiber fabric in a dry non-swollen state and Figure 6 shows the fiber fabric in a humid swollen state.
Figure 7 shows an experimentally captured image of nonwoven cellulose fiber fabric according to an exemplary embodiment of the invention in which formation of two superposed layers of fibers has been accomplished by a specific process implementing two serial bars of nozzles.
Figure 8 shows an image of a nonwoven cellulose fiber fabric with twists, intra fiber diameter variations, inter fiber diameter variations, in a substantially parallel manner coagulated fibers, and differently sized and shaped cavities.
Figure 9 shows a single fiber with its internal structure comprising a plurality of fibrils.
Figure 10 shows how a roundness of a fiber having a cross-section deviating from a circular can be calculated as the ratio between the inscribed and the circumscribed circles of the fiber cross-section fiber.
Figure 11 shows a schematic image of nonwoven cellulose fiber fabric in which different types of merging positions and several crossing positions between fibers are illustrated.
Figure 12 shows a schematic image of a nonwoven cellulose fiber fabric comprising two stacked and merged fiber network layers.
Figure 13 illustrates a part of a device for manufacturing nonwoven cellulose fiber fabric composed of two stacked layers of endless cellulose fiber webs according to an exemplary embodiment of the invention.
Figure 14 illustrates a nonwoven cellulose fiber fabric comprising three network layers.

### Detailed Description of the Drawing

The illustration in the drawing is schematic. It is noted that in different figures, similar or identical elements or features are provided with the same reference signs. In order to avoid unnecessary repetitions elements or features which have already been elucidated with respect to a previously described embodiment are not elucidated again at a later position of the description.

Further, spatially relative terms, such as "front" and "back", "above" and "below", "left" and "right", et cetera are used to describe an element's relationship to another element(s) as illustrated in the figures. Thus, the spatially relative terms may apply to orientations in use which differ from the orientation depicted in the figures. Obviously all such spatially relative terms refer to the orientation shown in the figures only for ease of description and are not necessarily limiting as an apparatus according to an embodiment of the invention can assume orientations different than those illustrated in the figures when in use.

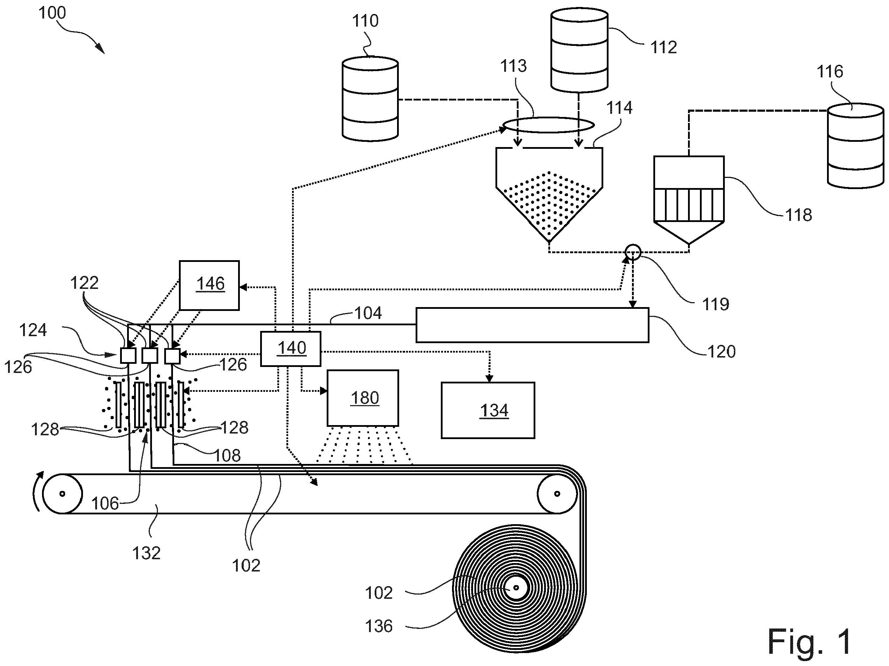

**Figure 1** illustrates a device 100 according to an exemplary embodiment of the invention for manufacturing nonwoven cellulose fiber fabric 102 which is directly formed from lyocell spinning solution 104. The latter is at least partly coagulated by a coagulation fluid 106 to be converted into partly-formed cellulose fibers 108. By the device 100, a lyocell solution blowing process according to an exemplary embodiment of the invention may be carried out. In the context of the present application, the term "lyocell solution-blowing process" may particularly encompass processes which can result in essentially endless filaments or fibers 108 of a discrete length or mixtures of endless filaments and fibers of discrete length being obtained. As further described below, nozzles each having an orifice 126 are provided through which cellulose solution or lyocell spinning solution 104 is ejected together with a gas stream or gas flow 146 for manufacturing the nonwoven cellulose fiber fabric 102 according to an exemplary embodiment of the invention.

As can be taken from Figure 1, wood pulp 110, other cellulose-based feedstock or the like may be supplied to a storage tank 114 via a metering unit 113. Water from a water container 112 is also supplied to the storage tank 114 via metering unit 113. Thus, the metering unit 113, under control of a control unit 140 described below in further detail, may define relative amounts of water and wood pulp 110 to be supplied to the storage tank 114. A solvent (such as N-methyl-morpholine, NMMO) accommodated in a solvent container 116 may be concentrated in a concentration unit 118 and may then be mixed with the mixture of water and wood pulp 110 or other cellulose-based feedstock with definable relative amounts in a mixing unit 119. Also the mixing unit 119 can be controlled by the control unit 140. Thereby, the water-wood pulp 110 medium is dissolved in the concentrated solvent in a dissolving unit 120 with adjustable relative amounts, thereby obtaining lyocell spinning solution 104. The aqueous lyocell spinning solution 104 can be a honey-viscous medium composed of (for instance 5 mass % to 15 mass %) cellulose comprising wood pulp 110 and (for instance 85 mass % to 95 mass %) solvent.

The lyocell spinning solution 104 is forwarded to a fiber formation unit 124 (which may be embodied as or which may comprise a number of spinning beams or jets 122). For instance, the number of orifices 126 of the jets 122 may be larger than 50, in particular larger than 100. In one embodiment, all orifices 126 of a fiber formation unit 124 (which may comprise a number of spinnerets of jets 122) of orifices 126 of the jets 122 may have the same size and/or shape.

Alternatively, size and/or shape of different orifices 126 of one jet 122 and/or orifices 126 of different jets 122 (which may be arranged serially for forming a multilayer fabric) may be different. The orifices 126 may be arranged as one dimensional alignment of orifices 126.

When the lyocell spinning solution 104 passes through the orifices 126 of the jets 122, it is divided into a plurality of parallel strands of lyocell spinning solution 104. A vertically oriented gas flow, i.e. being oriented substantially parallel to spinning direction, forces the lyocell spinning solution 104 to transform into increasingly long and thin strands which can be adjusted by changing the process conditions under control of control unit 140. The gas flow may accelerate the lyocell spinning solution 104 along at least a part of its way from the orifices 126 to a fiber support unit 132.

While the lyocell spinning solution 104 moves through the jets 122 and further downward, the long and thin strands of the lyocell spinning solution 104 interact with non-solvent coagulation fluid 106. The coagulation fluid 106 is advantageously embodied as a vapor mist, for instance an aqueous mist. Process relevant properties of the coagulation fluid 106 are controlled by one or more coagulation units 128, providing the coagulation fluid 106 with adjustable properties. The coagulation units 128 are controlled, in turn, by control unit 140. Preferably, respective coagulation units 128 are provided between the individual nozzles or orifices 126 for individually adjusting properties of respective layers of fabric 102 being produced. Preferably, each jet 122 may have two assigned coagulation units 128, one from each side. The individual jets 122 can thus be provided with individual portions of lyocell spinning solution 104 which may also be adjusted to have different controllable properties of different layers of manufactured fabric 102.

When interacting with the coagulation fluid 106 (such as water), the solvent concentration of the lyocell spinning solution 104 is reduced, so that the cellulose of the former e.g. wood pulp 110 (or other feedstock) is at least partly coagulated as long and thin cellulose fibers 108 (which may still contain residual solvent and water).

During or after initial formation of the individual cellulose fibers 108 from the extruded lyocell spinning solution 104, the cellulose fibers 108 are deposited on fiber support unit 132, which is here embodied as a conveyor belt with a planar fiber accommodation surface. The cellulose fibers 108 form a nonwoven cellulose fiber fabric 102 (illustrated only schematically in Figure 1). The nonwoven cellulose fiber fabric 102 is composed of continuous and substantially endless filaments or fibers 108.

Although not shown in Figure 1, the solvent of the lyocell spinning solution 104 removed in coagulation by the coagulation unit 128 and in washing in a washing unit 180 can be at least partially recycled.

While being transported along the fiber support unit 132, the nonwoven cellulose fiber fabric 102 can be washed by washing unit 180 supplying wash liquor to remove residual solvent and may then be dried. It can be further processed by an optional but advantageous further processing unit 134. For instance, such a further processing may involve hydro-entanglement, needle punching, impregnation, steam treatment with a pressurized steam, calendering, etc.

The fiber support unit 132 may also transport the nonwoven cellulose fiber fabric 102 to a winder 136 on which the nonwoven cellulose fiber fabric 102 may be collected as a substantially endless sheet. The nonwoven cellulose fiber fabric 102 may then be shipped as roll-good to an entity manufacturing products such as wipes or textiles based on the nonwoven cellulose fiber fabric 102.

As indicated in Figure 1, the described process may be controlled by control unit 140 (such as a processor, part of a processor, or a plurality of processors). The control unit 140 is configured for controlling operation of the various units shown in Figure 1, in particular one or more of the metering unit 113, the mixing unit 119, the fiber formation unit 124, the coagulation unit(s) 128, the further processing unit 134, the dissolution unit 120, the washing unit 118, etc. Thus, the control unit 140 (for instance by executing computer executable program code, and/or by executing control commands defined by a user) may precisely and flexibly define the process parameters according to which the nonwoven cellulose fiber fabric 102 is manufactured. Design parameters in this context are air flow along the orifices 126, properties of the coagulation fluid 106, drive speed of the fiber support unit 132, composition, temperature and/or pressure of the lyocell spinning solution 104, etc. Additional design parameters which may be adjusted for adjusting the properties of the nonwoven cellulose fiber fabric 102 are number and/or mutual distance and/or geometric arrangement of the orifices 126, chemical composition and degree of concentration of the lyocell spinning solution 104, etc. Thereby, the properties of the nonwoven cellulose fiber fabric 102 may be properly adjusted, as described below. Such adjustable properties (see below detailed description) may involve one or more of the following properties: diameter and/or diameter distribution of the fibers 108, amount and/or regions of merging between fibers 108, a purity level of the fibers 108, properties of a multilayer fabric 102, optical properties of the fabric 102, fluid retention and/or fluid release properties of the fabric 102, mechanical stability of the fabric 102, smoothness of a surface of the fabric 102, cross-sectional shape of the fibers 108, etc.

Although not shown, each spinning jet 122 may comprise a polymer solution inlet via which the lyocell spinning solution 104 is supplied to the jet 122. Via an air inlet, a gas flow 146 can be applied to the lyocell spinning solution 104. Starting from an interaction chamber in an interior of the jet 122 and delimited by a jet casing, the lyocell spinning solution 104 moves or is accelerated (by the gas flow 146 pulling the lyocell spinning solution 104 downwardly) downwardly through a respective orifice 126 and is laterally narrowed under the influence of the gas flow 146 so that continuously tapering cellulose filaments or cellulose fibers 108 are formed when the lyocell spinning solution 104 moves downwardly together with the gas flow 146 in the environment of the coagulation fluid 106.

Thus, processes involved in the manufacturing method described by reference to Figure 1 may include that the lyocell spinning solution 104, which may also be denoted as cellulose solution is shaped to form liquid strands or latent filaments, which are drawn by the gas flow 146 and significantly decreased in diameter and increased in length. Partial coagulation of latent filaments or fibers 108 (or preforms thereof) by coagulation fluid 106 prior to or during web formation on the fiber support unit 132 may also be involved. The filaments or fibers 108 are formed into web like fabric 102, washed, dried and may be further processed (see further processing unit 134), as required. The filaments or fibers 108 may for instance be collected, for example on a rotating drum or belt, whereby a web is formed.

As a result of the described manufacturing process and in particular the choice of solvent used, the fibers 108 have a copper content of less than 5 ppm and have a nickel content of less than 2 ppm. This advantageously improves purity of the fabric 102.

The lyocell solution blown web (i.e. the nonwoven cellulose fiber fabric 102) according to exemplary embodiments of the invention preferably exhibits one or more of the following properties:
(i) The dry weight of the web is from 5 to 300 g/m², preferably 10-80 g/m²
(ii) The thickness of the web according to the standard WSP120.6 respectively DIN29073 (in particular in the latest version as in force at the priority date of the present patent application) is from 0.05 to 10.0 mm, preferably 0.1 to 2.5 mm
(iii) The specific tenacity of the web in MD according to EN29073-3, respectively IS09073-3 (in particular in the latest version as in force at the priority date of the present patent application) ranges from 0.1 to 3.0 Nm²/g, preferably from 0.4 to 2.3 Nm²/g
(iv) The average elongation of the web according to EN29073-3, respectively ISO9073-3 (in particular in the latest version as in force at the priority date of the present patent application) ranges from 0.5 to 100%, preferably from 4 to 50%.
(v) The MD/CD tenacity ratio of the web is from 1 to 12
(vi) The water retention of the web according to DIN 53814 (in particular in the latest version as in force at the priority date of the present patent application) is from 1 to 250%, preferably 30 to 150%
(vii) The water holding capacity of the web according to DIN 53923 (in particular in the latest version as in force at the priority date of the present patent application) ranges from 90 to 2000%, preferably 400 to 1100%
(viii) Metal residue levels of copper content of less than 5 ppm and nickel content of less than 2 ppm according to the standards EN 15587-2 for the substrate decomposition and EN 17294-2 for the ICP-MS analysis (in particular in the latest version as in force at the priority date of the present patent application).

Most preferably, the lyocell solution-blown web exhibits all of said properties (i) to (viii) mentioned above.

As described, the process to produce the nonwoven cellulose fiber fabric 102 preferably comprises:
(a) Extruding a solution comprising cellulose dissolved in NMMO (see reference numeral 104) through the orifices 126 of at least one jet 122, thereby forming filaments of lyocell spinning solution 104
(b) Stretching said filaments of lyocell spinning solution 104 by a gaseous stream (see reference numeral 146)
(c) Contacting said filaments with a vapor mist (see reference numeral 106), preferably containing water, thereby at least partly precipitating said fibers 108. Consequently, the filaments or fibers 108 are at least partly precipitated before forming web or nonwoven cellulose fiber fabric 102.
(d) Collecting and precipitating said filaments or fibers 108 in order to form a web or nonwoven cellulose fiber fabric 102
(e) Removing solvent in wash line (see washing unit 180)
(f) Optionally bonding via hydro-entanglement, needle punching, etc. (see further processing unit 134)
(g) Drying and roll collection

Constituents of the nonwoven cellulose fiber fabric 102 may be bonded by merging, intermingling, hydrogen bonding, physical bonding such as hydroentanglement or needle punching, and/or chemical bonding.

In order to be further processed, the nonwoven cellulose fiber fabric 102 may be combined with one or more layers of the same and/or other materials, such as (not shown) layers of synthetic polymers, cellulosic fluff pulp, nonwoven webs of cellulose or synthetic polymer fibers, bicomponent fibers, webs of cellulose pulp, such as airlaid or wetlaid pulp, webs or fabrics of high tenacity fibers, hydrophobic materials, high performance fibers (such as temperature resistant materials or flame retardant materials), layers imparting changed mechanical properties to the final products (such as Polypropylene or Polyester layers), biodegradable materials (e.g. films, fibers or webs from Polylactic acid), and/or high bulk materials.

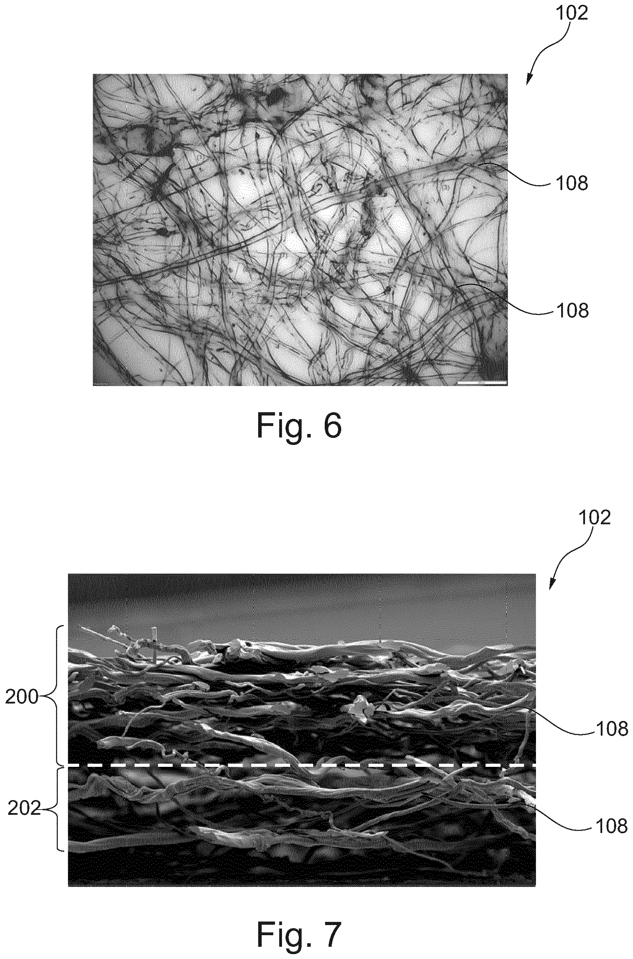

It is also possible to combine several distinguishable layers of nonwoven cellulose fiber fabric 102, see for instance Figure 7.

The nonwoven cellulose fiber fabric 102 may essentially consist of cellulose alone. Alternatively, the nonwoven cellulose fiber fabric 102 may comprise a mixture of cellulose and one or more other fiber materials. The nonwoven cellulose fiber fabric 102, furthermore, may comprise a bicomponent fiber material. The fiber material in the nonwoven cellulose fiber fabric 102 may at least partly comprise a modifying substance. The modifying substance may be selected from, for example, the group consisting of a polymeric resin, an inorganic resin, inorganic pigments, antibacterial products, nanoparticles, lotions, fire-retardant products, absorbency-improving additives, such as superabsorbent resins, ion-exchange resins, carbon compounds such as active carbon, graphite, carbon for electrical conductivity, X-ray contrast substances, luminescent pigments, and dye stuffs.

Concluding, the cellulose nonwoven web or nonwoven cellulose fiber fabric 102 manufactured directly from the lyocell spinning solution 104 allows access to value added web performance which is not possible via staple fiber route. This includes the possibility to form uniform lightweight webs, to manufacture microfiber products, and to manufacture continuous filaments or fibers 108 forming a web. Moreover, compared to webs from staple fibers, several manufacturing procedures are no longer required. Moreover, nonwoven cellulose fiber fabric 102 according to exemplary embodiments of the invention is biodegradable and manufactured from sustainably sourced raw material (i.e. wood pulp 110 or the like). Furthermore, it has advantages in terms of purity and absorbency. Beyond this, it has an adjustable mechanical strength, stiffness and softness. Furthermore, nonwoven cellulose fiber fabric 102 according to exemplary embodiments of the invention may be manufactured with low weight per area (for instance 10 to 30 g/m²). Very fine filaments down to a diameter of not more than 5 µm, in particular not more than 3 µm, can be manufactured with this technology. Furthermore, nonwoven cellulose fiber fabric 102 according to an exemplary embodiment of the invention may be formed with a wide range of web aesthetics, for instance in a flat crispy film-like way, in a paper-like way, or in a soft flexible textile-like way. By adapting the process parameters of the described process, it is furthermore possible to precisely adjust stiffness and mechanical rigidity or flexibility and softness of the nonwoven cellulose fiber fabric 102. This can be adjusted for instance by adjusting a number of merging positions, the number of layers, or by after-treatment (such as needle punch, hydro-entanglement and/or calendering). It is in particular possible to manufacture the nonwoven cellulose fiber fabric 102 with a relatively low basis weight of down to 10 g/m² or lower, to obtain filaments or fibers 108 with a very small diameter (for instance of down to 3 to 5 µm, or less), etc.

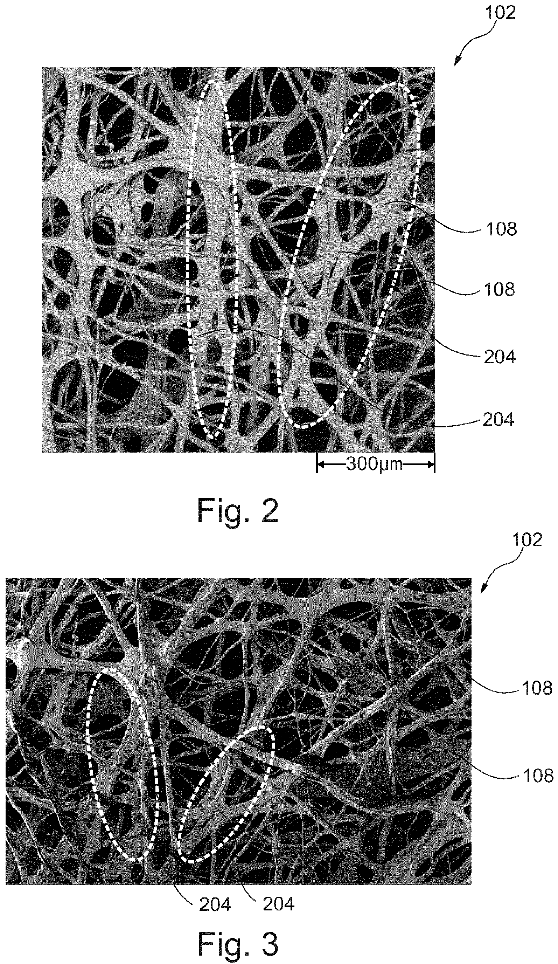

**Figure 2**, **Figure 3** and **Figure 4** show experimentally captured images of nonwoven cellulose fiber fabric 102 according to an exemplary embodiment of the invention in which merging of individual fibers 108 has been accomplished by a corresponding process control. The oval markers in Figure 2 to Figure 4 show such merging regions where multiple fibers 108 are integrally connected to one another. At such merging points, two or more fibers 108 may be interconnected to form an integral structure.

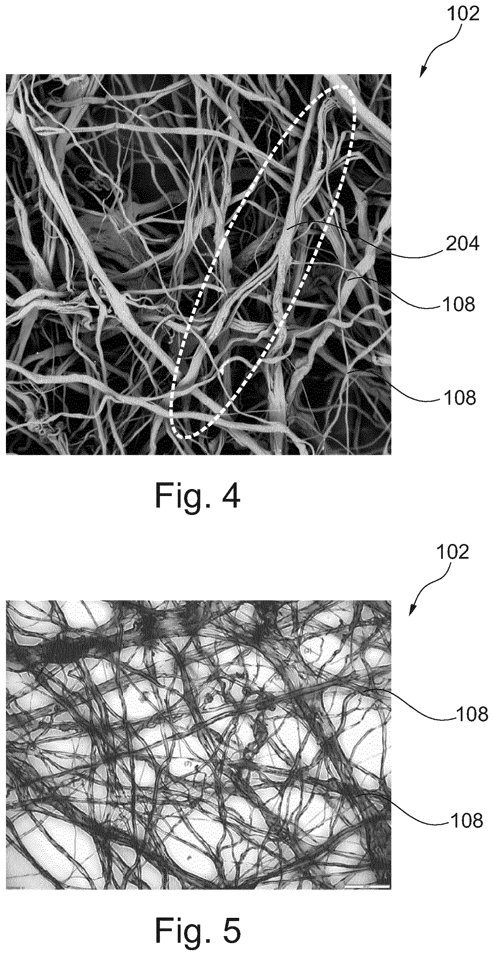

**Figure 5** and **Figure 6** show experimentally captured images of nonwoven cellulose fiber fabric 102 according to an exemplary embodiment of the invention in which swelling of fibers 108 has been accomplished, wherein Figure 5 shows the fiber fabric 102 in a dry non-swollen state and Figure 6 shows the fiber fabric 102 in a humid swollen state. The pore diameters can be measured in both states of Figure 5 and Figure 6 and can be compared to one another. When calculating an average value of 30 measurements, a decrease of the pore size by swelling of the fibers 108 in an aqueous medium up to 47% of their initial diameter could be determined.

**Figure 7** shows an experimentally captured image of nonwoven cellulose fiber fabric 102 according to an exemplary embodiment of the invention in which formation of two superposed layers 200, 202 of fibers 108 has been accomplished by a corresponding process design, i.e. a serial arrangement of multiple spinnerets. The two separate, but connected layers 200, 202 are indicated by a horizontal line in Figure 7. For instance, an n-layer fabric 102 (n≥2) can be manufactured by serially arranging n spinnerets or jets 122 along the machine direction.

Specific exemplary embodiments of the invention will be described in the following in more detail:

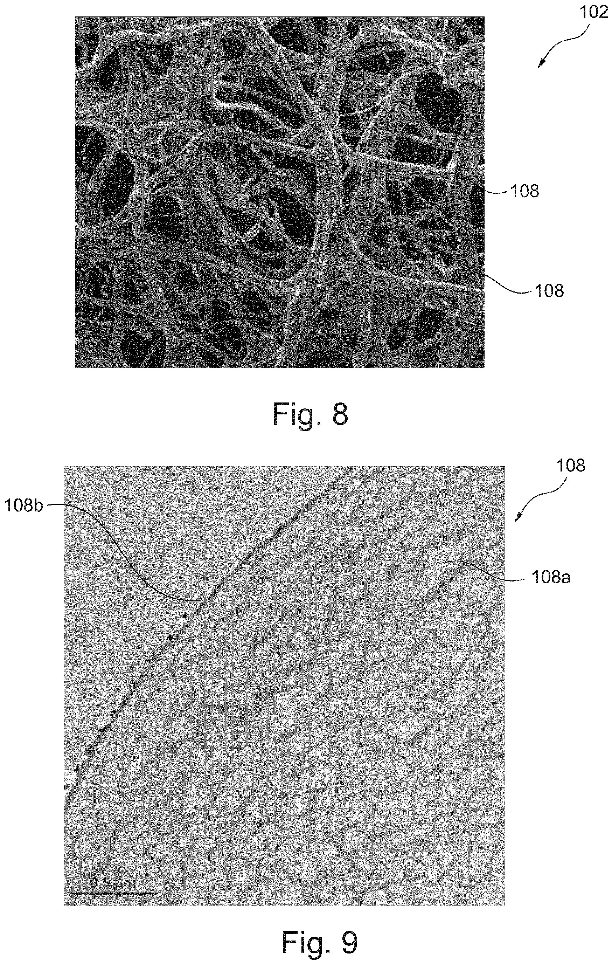

**Figure 8** shows an experimentally captured image of a nonwoven cellulose fiber fabric 102 according to an embodiment of the invention. Figure 8 shows that the fiber network includes fibers 108 being characterized by different variations of diameter/titer and shape. This involves twists, intra fiber thickness variations, inter fiber thickness variations, in a substantially parallel manner coagulated fibers 108, and differently sized and shaped cavities.

It is mentioned that the mixture of thinner and thicker fibers may provide several welcome properties of the fabric 102. For instance thin fibers may yield a high capillarity between neighboring fibers which improves liquid holding capability. Thicker fibers may contribute to a high mechanical stiffness of the three dimensional fiber fabric structure. Such an increased fiber stiffness may be necessary if so called micro pores, which have been developed within the fiber network, do not collapse in particular because of adhesion forces between different fibers. In this context it should be clear that the collapse of such micro pores would decrease the liquid holding capability. Of course, any cavity, chamber, void, gap, or pore provides, due it's capillary forces, a more or less strong contribution to the liquid holding capability of the fabric 102.

Twists may be given by at least two individual fibers which are twisted around each other in a spiral manner. Further, also a single fiber 108 which has a non-circular cross section and which is twisted (with itself) may be considered as to represent such a twist. Without being bound to a specific physical theory it is presently believed that any type of twisting increases overall capillary forces within the fabric such that the liquid holding capability is increased.

In the lyocell spinning procedure the fiber diameter respectively the fiber titer can be adjusted for instance by varying the size of the orifice through which the respective lyocell fiber is extruded. Also a variation of a gas flow (see reference numeral 146 in Figure 1) accelerating the not yet coagulated fibers towards the (conveyor belt-type) fiber support unit 132 (see reference numeral 12 in Figure 1) may be used for forming intra thickness and/or inter thickness variations of fibers 108.

A variation along the length of the fiber may be generated for instance by means of pressure and/or velocity variations of the gas flow which accelerates the extruded lyocell spinning solution towards the conveyor type fiber support unit (see reference numeral 132 in Figure 1).

**Figure 9** shows an experimentally captured image of a single cellulose fiber 108 and its internal structure. The curved line denominated with reference numeral 108b is the so called shell of the fiber 108. As can be seen from this Figure, the internal structure of the fiber comprises a plurality of fibrils 108a. Due to the presence of the fibrils 108a also the internal structure of the fiber 108 can be considered as to represent a (submicron) channels which may provide a significant contribution to the liquid holding capability.

Experimental studies have revealed that surprisingly the described fibrils are a feature which is in particular pronounced in fibers having been produced by means of a lyocell spinning procedure. Specifically, a high homogeneity of the (submicron) fibril structure within the fiber 108 can be achieved. It has further been found out that an adjusted gas flow for the fiber coagulation process at a position, before the fiber coagulation is taking place, promotes the formation of fibril structures with channels in the submicron range, which are in particular suitable for accommodating liquids. The fibrils, which in this picture can be understood as to represent a system of submicron tubes provide a strong contribution to the liquid holding capability of the (internal structure of the) respective fiber.

At this point it is mentioned that a liquid absorption within the inner structure of the fibers goes along with a swelling process of the fibers. Compared with thermoplastic materials a carefully produced lyocell fiber exhibits within its interior a comparatively homogeneous capillary system of fibrils, which system extends along the fiber. This capillary system swells upon liquid absorption.

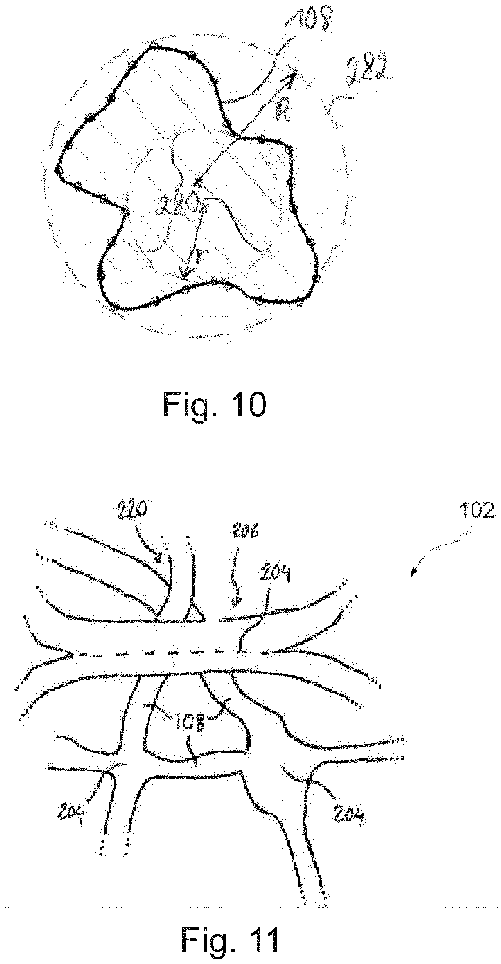

**Figure 10** shows how a roundness of fibers 108 having a cross-section deviating from a circular cross-section can be calculated as the ratio between an inscribed circle 280 and a circumscribed circle 282 of the cross-section of the fiber 108 according to an exemplary embodiment of the invention.

The minimum circumscribed circle 282 is defined as the smallest circle which encloses the entirety of the roundness profile of the cross-section of the fiber 108 illustrated in Figure 10. The maximum inscribed circle 280 is defined as the largest circle that can be inscribed inside the roundness profile of the cross-section of the fiber 108 as illustrated in Figure 10. In the context of this document, roundness can be defined as a ratio between a radius r of the inscribed circle 280 divided by a radius R of the circumscribed surface 282 (or vice versa). Roundness may be indicated by a resulting percentage value. In the present example, R≈2r and the roundness of the fiber 108 is therefore approximately 50%. For comparison, a circular cylindrical fiber 108 fulfills the condition R=r and has a roundness of one.

The curvature of the fiber shell within the drawing plane, i.e. at least substantially perpendicular to the longitudinal extension of the fiber, also contributes to a formation of (small cavities) which may have an impact on the overall capillary forces and accommodate liquid particles of water based and/or oil based liquids. As a consequence, also a deviation from a circular cross section may help the fabric to exhibit a large liquid holding capability.

Given a certain cross section the outer surface of the fiber increases with decreasing roundness respectively with increasing deviation from a circular cross section. Therefore, it should be clear that the roundness is also an important parameter which has an effect on capillary force and, as a consequence, also on the liquid holding capability of the fabric 102.

The cross sectional shape of the fibers may be adjusted for instance by the corresponding cross sectional shape of the orifice (denoted with reference numeral 126 in Figure 1) through which the respective portion of the lyocell spinning solution is extruded. However, also other structural dimensions of the respective orifice may have an influence on the cross sectional shape of the resulting fiber 108.

**Figure 11** shows a schematic image of nonwoven cellulose fiber fabric 102 according to an exemplary embodiment of the invention in which on the one hand different types of merging positions 204 between fibers 108 and on the other hand non-merged crossing positions 220 between fibers 108 are shown.

The merging positions 204 comprise a merging point, wherein at least two different fibers intersect with each other, and a merging line along which fibers 108 are mutually aligned side-by-side over a portion of their length to form a superordinate fiber structure 206 with a diameter increase along the entire merging line. While the fibers 108 are integrally connected at the merging positions 204 and can be separated here only by destroying the fiber network, fibers 108 are only in frictional contact with one another at crossing positions 220 and can be freely moved here relatively to one another. Although merging and crossing between respectively two fibers 108 is illustrated in Figure 11, merging and/or crossing can also occur between respectively at least three fibers 108.

Without being bound to a specific theory it is presently believe that no or only a poor merging at a non-merged or only at a poor merged crossing position exhibits a barrier with regard to liquid travelling from one fiber to the other fiber. In case of a strong merging between at least two fibers (see e.g. reference numerals 204 in Figure 11) a liquid transfer between the involved fibers is much easier. Even in case of an unfavorable spatial course of the fibers within the fabric, all fibers can accommodate liquid particles such that they swell and provide a contribution to liquid absorbing and holding capability.

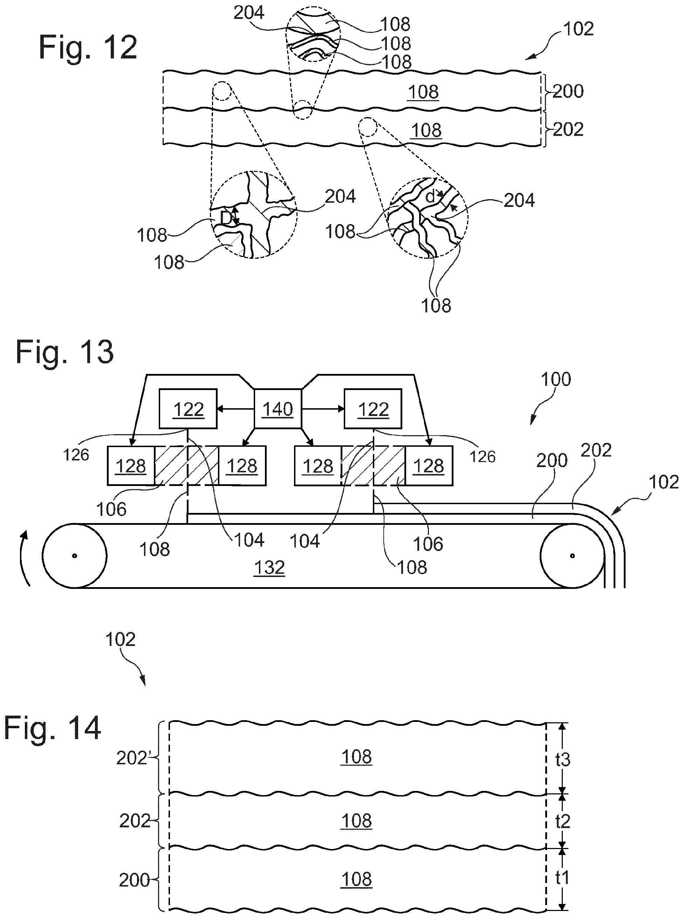

**Figure 12** shows a schematic cross sectional view of a nonwoven cellulose fiber fabric 102 which, in accordance with the invention, comprises two stacked and merged network layers of interconnected fibers 108. A first network layer comprising first fibers 108 is denominated with reference numeral 200. The second network layer comprising second fibers 108 is denominated with reference numeral 202. Due to different processing parameter (values) the first fibers 108 can differ from the second fibers 108 in at least one physical and/or chemical property.

According to the exemplary embodiment described here the (average) diameter of the first fibers 108 is larger than the (average) diameter of the second fibers 108. This is indicated by the lower two details of Figure 12. An important property of the interface between the layers 200, 202 is shown in the upper detail of Figure 12, where an intra-layer merging point 204 is visible which integrally couples fibers 108 of both layers 200, 202 at the interface for increasing stability of the fabric 102 at the interface. Additionally, different ones of the fibers 108 being located in the different layers 200, 202 are integrally connected at at least one respective inner-layer merging position 204 (see again the two lower details of Figure 12).

The fibers 108 located in the different fiber network layers 200, 202 and being formed with different average diameter may be provided with different functionalities. Such different functionalities may be supported by the different average diameters, but may also be further promoted by a respective coating or the like. Such different functionalities may for instance be a different behavior in terms of wicking, anisotropic behavior, different oil absorbing capability, different water absorbing and holding capability, different cleanability, and/or different roughness.

**Figure 13** illustrates a part of a device 100 for manufacturing nonwoven cellulose fiber fabric 102 composed of two stacked layers 200, 202 of endless cellulose fibers 108 according to an exemplary embodiment of the invention. A difference between the device 100 shown in Figure 13 and the device 100 shown in Figure 1 is that the device 100 according to Figure 13 comprises two serially aligned jets 122 and respectively assigned coagulation units 128, as described above. In the embodiment described here, two coagulation units 128 are assigned to each one of the jets 122. In Figure 12, one coagulation unit 128 is located on the left side of the path of the lyocell spinning solution 104 extending between the jet 122 and the fiber support unit 132 and the other coagulation unit 128 is located on the respective right side of this path. In view of the movable fiber accommodation surface of the conveyor belt-type fiber support unit 132, the upstream jet 122 on the left-hand side of Figure 13 produces layer 200. Layer 202 is produced by the downstream jet 122 (see right hand side of Figure 13) and is attached to an upper main surface of the previously formed layer 202 so that a double layer 200, 202 of fabric 102 is obtained.

According to Figure 13, the control unit 140 (controlling the jets 122 and all the coagulation units 128) is configured for adjusting process parameters so that the fibers 108 of the different layers 200, 202 differ concerning fiber diameter by more than 50% in relation to a smallest diameter. Adjusting the fiber diameters of the fibers 108 of the layers 200, 202 by the control unit 140 may comprise adjusting an amount of coagulation fluid 106 interacting with the lyocell spinning solution 104. Additionally, the embodiment of Figure 13 adjusts the process parameters for adjusting fiber diameter by serially arranging multiple jets 122 with orifices 126 (optionally with different properties) along the movable fiber support unit 132. For instance, such different properties may be different orifice 126 diameters, different speed of gas flow 146, different amounts of gas flow 146, and/or different gas flow 146 pressure. Although not shown in Figure 13, it is possible to further process the fibers 108 after collection on the fiber support unit 132 e.g.by hydro-entanglement, needle punching, impregnation, steam treatment with a pressurized steam, and/or calendering.

Still referring to the embodiment illustrated in Figure 13, one or more further nozzle bars or jets 122 may be provided and may be arranged serially along a transport direction of the fiber support unit 132. The multiple jets 122 may be arranged so that a further layer 202 of fibers 108 may be deposited on top of the previously formed layer 200, preferably before the coagulation or curing process of the fibers 108 of the layer 200 and/or of the layer 202 is fully completed, which may trigger merging. When properly adjusting the process parameters, this may have advantageous effects in terms of the properties of a multilayer fabric 102:
Without wishing to be bound to a specific theory, it is presently believed that the second layer 202 can be considered as a reinforcement of the first layer 200, which increases the homogeneity of the resulting nonwoven fabric 102. This increase of the mechanical stability can be further improved by fiber diameter variation (in particular *inter*-fiber diameter variation and/or *intra*-fiber longitudinal diameter variation of the individual fibers 108). When exerting deeper (in particular punctual) pressure (for instance provided by air or water), the cross-sectional shape of a fiber 108 can be further intentionally distorted, which may advantageously result in a further increased mechanical stability.

On the other hand, intended merging between fibers 108 of the fabric 102 according to Figure 13 can be triggered so as to further increase the mechanical stability of the fabric.

**Figure 14** illustrates a nonwoven cellulose fiber fabric 102 comprising three network layers. A first (lower) fiber network layer is denominated with reference numeral 200. A second (middle) fiber network layer, which is formed on top of the first fiber network layer 200, is denominated with reference numeral 202. A further (upper) fiber network layer, which is formed on top of the second fiber network layer 202, is denominated with reference numeral 202'. As has already been mentioned above, the fabric 102 may comprise more than three stacked fiber network layers.

As can be further seen from Figure 14, the three fiber network layers 200, 202, 202' have different thicknesses. The first fiber network layer 200 has a first thickness t1. The second fiber network layer 202 has a second thickness t2. The further fiber network layer 202' has a third thickness t3.

The fabric described in this document is characterized by a high water holding capability in connection with a low basis weight. Specifically, despite of the low basis weight of less than 25 gram per square meter a large water holding capability of at least 850 mass percent can be achieved.

In particular for applications requiring certain haptic characteristics suitable specific basic properties of a fibrous web made from the described fabric can be tailored towards the specific application. Such a specific basic property may be for instance a specific liquid absorbing, holding and/or releasing management combined with a soft haptic characteristic of a cover layer of the fabric. In particular, the above described design parameter of fiber thickness variations allows to produce a desired combination of softness, mechanical stability, liquid absorbing and holding capability, wicking (speed), etc.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

### List of reference signs:

- 100: device for manufacturing nonwoven cellulose fiber fabric
- 102: nonwoven cellulose fiber fabric / web like fabric
- 104: lyocell spinning solution
- 106: coagulation fluid
- 108: fibers
- 108a: fibril
- 108b: fiber shell
- 110: wood pulp
- 112: water container
- 113: metering unit
- 114: storage tank
- 116: solvent container
- 118: washing unit
- 119: mixing unit
- 120: dissolving unit
- 122: jet
- 124: fiber formation unit
- 126: orifices
- 128: coagulation unit
- 132: (conveyor belt-type) fiber support unit
- 134: further processing unit
- 136: roll
- 140: control unit
- 146: gas flow

- 200: merged layer / first network layer
- 202: merged layer / second network layer
- 202': merged layer / further network layer
- 204: intra-layer merging position / intra-layer merging point / intra-layer merging line
- 206: superordinate fiber structure
- 220: non-merged crossing positions
- 280: inscribed circle
- 282: circumscribed circle

- r, R: radius of inscribed circle respectively circumscribed circle
- t1, t2, t3: layer thicknesses

## Claims

1. A nonwoven cellulose fiber fabric (102), in particular directly manufactured from a lyocell spinning solution (104), the fabric (102) comprising
a network of substantially endless fibers (108), wherein
the fabric (102) exhibits a water holding capability of at least 850 mass percent, and
the fabric (102) comprises a mass per unit area which is lower than 25 gram per square meter.

2. The fabric (102) as set forth in the preceding claim, wherein
the fibers (108) have a copper content of less than 5 ppm and/or have a nickel content of less than 2 ppm.

3. The fabric (102) as set forth in any one of the preceding claims, wherein different ones of the fibers (108) are located at least partially in different distinguishable layers (200, 202), wherein in particular
the fabric comprises at least one of the following features:
fibers (108) of different layers (200, 202) are integrally connected at at least one inter-layer merging position (204) between the layers (200, 202);
different ones of the fibers (108) being located at least partially in different layers (200, 202) differ concerning fiber diameter, in particular differ concerning an averaged fiber diameter;
fibers (108) of different layers (200, 202) have the same fiber diameter, in particular have substantially the same averaged fiber diameter;
fibers (108) networks of different layers (200, 202) provide different functionality, wherein the different functionality in particular comprises at least one of the group consisting of different wicking, different anisotropic behavior, different optical properties, different liquid holding capability, different cleanability, different roughness, different smoothness, and different mechanical properties.

4. The fabric (102) as set forth in the preceding claim, wherein
fiber networks in different layers have different merging factors, or
fiber networks in different layers have at least approximately the same merging factor.

5. The fabric (102) as set forth in any one of the preceding claims, wherein
the mass per unit area is between 5 and 25 gram per square meter, in particular between 8 and 20 gram per square meter.

6. The fabric (102) as set forth in any one of the preceding claims, wherein
the fabric (102) exhibits a water holding capability of at least 900 mass percent, in particular of at least 950 mass percent and further in particular of at least 1000 mass percent.

7. The fabric (102) as set forth in any one of the preceding claim, wherein
the fabric (102) exhibits an oil holding capability of at least 800 mass percent, in particular of at least 1500 mass percent, and further in particular of at least 2000 mass percent.

8. The fabric (102) as set forth in any one of the preceding claims, wherein
the fiber network comprises at least one of the following features:
different sections of the same fiber (108) differ concerning fiber diameter so that a ratio between a largest fiber diameter of this fiber (108) and a smallest fiber diameter of this fiber (108) is more than 1.5;
different fibers (108) differ concerning fiber diameter so that a ratio between a largest fiber diameter of one of the fibers (108) and a smallest fiber diameter of another one of the fibers (108) is more than 1.5.

9. The fabric (102) as set forth in any one of the preceding claims, wherein
the fiber network comprises at least one of the following features:
at least 3%, in particular at least 5%, of the fibers (108) have a non-circular cross sectional shape having a roundness of not more than 90%;
at least 1%, in particular at least 3%, of the fibers (108) have a non-circular cross sectional shape having a roundness of not more than 80%, in particular of not more than 70%.

10. The fabric (102) as set forth in any one of the preceding claims, wherein
at least part of the fibers (108) are integrally merged at merging positions (204), wherein in particular a merging factor of the fibers (108) is in a range between 0.1% and 100%, in particular in a range between 0,2% and 15%, and further in particular in a range between 0.5% and 10%.

11. The fabric (102) as set forth in any one of the preceding claims, wherein
at least some individual fibers are twisted with each other and/or
at least one fiber structure is twisted with another fiber structure.

12. A method of manufacturing nonwoven cellulose fiber fabric (102), in particular a fabric (102) as set forth in any one of the preceding claims, directly from a lyocell spinning solution (104), the method comprising
extruding the lyocell spinning solution (104) through a jet (122) with orifices (126) supported by a gas flow (146) into a coagulation fluid (106) atmosphere to thereby form substantially endless fibers (108);
collecting the fibers (108) on a fiber support unit (132) to thereby form the fabric (102); and
adjusting process parameters of the manufacturing process so that the fabric (102) exhibits a water holding capability of at least 850 mass percent, and
the fabric (102) comprises a mass per unit area which is smaller than 25 gram per square meter.

13. A device (100) for manufacturing nonwoven cellulose fiber fabric (102) directly from a lyocell spinning solution (104), in particular for manufacturing a fabric as set forth in any one of the preceding claims 1 to 11, the device (100) comprising
a jet (122) with orifices (126) configured for extruding the lyocell spinning solution (104) supported by a gas flow (146);
a coagulation unit (128) configured for providing a coagulation fluid (106) atmosphere for the extruded lyocell spinning solution (104) to thereby form substantially endless fibers (108);
a fiber support unit (132) configured for collecting the fibers (108) to thereby form the fabric (102); and
a control unit (140) configured for adjusting process parameters so that the fabric (102) exhibits a water holding capability of at least 850 mass percent, and
the fabric (102) comprises a mass per unit area which is smaller than 25 gram per square meter.

14. A method of using a nonwoven cellulose fiber fabric (102) according to any of claims 1 to 11 for at least one of the group consisting of a wipe, a dryer sheet, a filter, a hygiene product, a medical application product, a geotextile, agrotextile, clothing, a product for building technology, an automotive product, a furnishing, an industrial product, a product related to leisure, beauty, sports or travel, and a product related to school or office.

15. A product or composite comprising a nonwoven cellulose fiber fabric (102)as set forth in any one of the preceding claims 1 to 11.
